# EUROPÄISCHE PATENTSCHRIFT

(11) **EP 0 867 350 B1**
(45) Veröffentlichungstag und Bekanntmachung des Hinweises auf die Patenterteilung: **07.08.2002**
(21) Anmeldenummer: 98103586.8
(22) Anmeldetag: 02.03.1998
(51) Int. Cl.: B60T 13/66, B60T 8/32

(54) **Bremsregelungsanlage für Kraftfahrzeuge**
Brake control system for vehicles
Système de contrôle de freinage pour véhicules

(30) Priorität: 27.03.1997 DE 19712859
(43) Veröffentlichungstag der Anmeldung: 30.09.1998
(73) Patentinhaber: Bayerische Motoren Werke Aktiengesellschaft, 80788 München (DE)
(72) Erfinder: Toelge, Thomas, 80993 München (DE); Unterforsthuber, Jakob, 82216 Maisach (DE)

(56) Entgegenhaltungen:
- DE-A- 4 427 246
- DE-A- 19 524 939
- DE-C- 4 413 172
- DE-U- 8 911 963
- US-A- 5 607 209
- PATENT ABSTRACTS OF JAPAN vol. 1997, no. 04, 30. April 1997 (1997-04-30) & JP 08 332943 A (JIDOSHA KIKI CO LTD), 17. Dezember 1996 (1996-12-17)

## Beschreibung

Die Erfindung betrifft eine Bremsregelungsanlage für Kraftfahrzeuge nach dem Oberbegriff des Patentanspruchs 1.

Eine derartige Bremsregelungsanlage ist beispielsweise aus der DE 44 27 246 C2 bekannt. Bei der DE 44 27 246 C2 sind die vom Bremspedal entkoppelten steuerbaren Hilfs-Bremskreis-Komponenten insbesondere Hydraulikkomponenten eines ABS-Regelkreises, wie z. B. elektrisch steuerbare Ventile und Druckmittelförderpumpen.

Bei der DE 44 13 172 C1 besteht die vom Bremspedal entkoppelte steuerbare Hilfs-Bremskreis-Komponente insbesondere in einem Ventil, das das Belüften der bremspedalseitigen Kammer eines Unterdruck-Bremskraftverstärkers ermöglicht.

Bei beiden Systemen ist in einem Hilfsbetrieb der tatsächliche Druckwert in den Radbremszylindern höher einstellbar als der Wert, der durch den Fahrer über die Betätigung des Bremspedals üblicherweise vorgegeben wird. Im Hilfsbetrieb, insbesondere in Notsituationen, findet demnach gegenüber der über die Betätigung des Bremspedals üblicherweise ausgelösten Bremskraft eine Bremskraftüberlagerung statt. Das Auslösekriterium für das Umschalten in den Hilfsbetrieb ist bei den Gegenständen beider Druckschriften die Überschreitung eines definierten Schwellwerts der Geschwindigkeit, mit der der Fahrer das Bremspedal betätigt. Hierzu wird mittels eines direkt am Bremspedal angeordneten Pedalwertgebers der zurückgelegte Pedalweg über der Zeit gemessen.

Aus der DE 44 13 172 C1 ist darüber hinaus bekannt, diesen Schwellwert in Abhängigkeit von verschiedenen Fahrparametern in Form einer Auslöseempfindlichkeit zu verändern. Derartige Fahrparameter sind beispielsweise die Geschwindigkeit des Loslassens des Gaspedals sowie die Pedalwechselzeit zwischen dem vollständigen Loslassen des Gaspedals und dem Beginn der Betätigung des Bremspedals.

Aus der DE 44 27 246 C2 ist weiterhin bekannt, zum Pedalstellungsgeber zur Erfassung der Pedal-Betätigungsgeschwindigkeit hinzu einen Drucksensor am Druckausgang des Hauptbremszylinders anzuordnen. Durch diesen Drucksensor ist der Vorsteuerdruck, der über die Betätigung des Bremspedals vom Fahrer am Ausgang des Hauptbremszylinders vorgebbar ist, erfassbar. Dieser Vorsteuerdruck ist ein genaues Maß für den Fahrerwunsch hinsichtlich der zu erreichenden Fahrzeugverzögerung. Das Signal dieses Drucksensors wird bei der DE 44 27 246 C2 nicht als Auslösekriterium zum Umschalten auf den Hilfsbetrieb verwendet, sondern erst nach Fortsetzung oder Beendigung des Hilfsbetriebs ausgewertet.

Aus der US-A-5 727 854 ist eine Bremsregelungsanlage für Kraftfahrzeuge mit einem elektronischen Steuergerät und mit einem Bremspedal bekannt, über dessen Betätigung ein Vorsteuerdruck vom Fahrer vorgebbar ist. Die Bremsregelungsanlage weist außerdem vom Bremspedal entkoppelt steuerbare Hilfs-Bremskreis-Komponenten auf, mit denen Druckwerte in den Radbremszylindern eines Kraftfahrzeug-Rades eingestellt werden können. Im Normalbetrieb entspricht der tatsächliche Druckwert dem Vorsteuerdruck, während im Hilfsbetrieb der tatsächliche Druckwert größer als der Vorsteuerdruck eingestellt werden kann, wobei ein Drucksensor zur Erfassung des Vorsteuerdrucks und des Vorsteuerdruck-Gradienten vorgesehen ist. Das Steuergerät schaltet auf den Hilfsbetrieb um, wenn der Vorsteuerdruck eine erste Schwelle und der Vorsteuerdruck-Gradient eine zweite Schwelle überschritten haben.

Es ist Aufgabe der Erfindung, die Bremsregelungsanlagen eingangs genannter Art derart zu verbessern, dass das Auslösekriterium zum Umschalten in den Hilfsbetrieb stärker an den Fahrerwunsch, d. h. an den Wert des Vorsteuerdruckes, gekoppelt wird. Zusätzlich soll ein möglichst kurzer Anhalteweg erreicht werden. Der Anhalteweg wird als der vom Fahrzeug zurückgelegte Weg ab Beginn des Lösens des Gaspedals bis zum Erreichen der gewünschten Fahrzeugverzögerung definiert.

Diese Aufgabe wird durch die kennzeichnenden Merkmale des Patentanspruchs 1 gelöst.

Vorteilhafte Weiterbildungen der Erfindung sind die Gegenstände der Unteransprüche 2 bis 4.

Geht man insbesondere von einer Bremsregelungsanlage nach der DE 44 27 246 C2 aus, entfällt zum einen der Pedalstellungsgeber zur Erfassung der Pedal-Betätigungsgeschwindigkeit direkt am Bremspedal. Zum anderen wird für das Auslösekriterium des Hilfsbetriebs der ohnehin bei Fahrzeugbremsregelungssystemen bereits vorhandene Drucksensor am Druckausgang des Hauptbremszylinders zur Erfassung des Vorsteuerdrucks verwendet. Der Vorsteuerdruck ist der Druck, der über die Betätigung des Bremspedals, nach einer Druck- bzw. Kraftumsetzung z. B. über einen Bremskraftverstärker und einen Hauptbremszylinder, in der Druckmittel-Leitung am Druckausgang des Hauptbremszylinders vorherrscht.

Im Normalbetrieb, d. h. ohne Bremskraftunterstützung mittels der Hilfs-Bremskreis-Komponenten, entspricht der tatsächliche Druckwert in den Radbremszylindern dem Wert dieses Vorsteuerdruckes, da eine direkte Verbindung über Druckmittelleitungen vom Druckausgang des Hauptbremszylinders zu den Radbremszylindern besteht und die Hilfs-Bremskreis-Komponenten ausgeschaltet sind.

Es wird nur dann auf den Hilfsbetrieb umgeschaltet, wenn erstens der Vorsteuerdruck selbst eine erste Schwelle und zweitens der Anstieg des Vorsteuerdruckes eine zweite Schwelle überschritten haben. Diese Schwellen werden entsprechend einem Fahrerwunsch auf eine starke Fahrzeugverzögerung festgelegt. Erfindungsgemäß ist eine Gaspedalsensoreinrichtung zur Erfassung der Geschwindigkeit des Loslassens des Gaspedals vorgesehen. Das Steuergerät bringt zumindest eine der Hilfs-Bremskreis-Komponenten in eine Vorbereitungsstellung, wenn die Geschwindigkeit des Loslassens des Gaspedals eine dritte Schwelle überschritten hat, auch wenn die Bedingungen zum Umschalten auf den Hilfsbetrieb noch nicht vorliegen.

Dadurch werden noch vor dem Vorliegen dieser Bedingungen zum Umschalten auf den Hilfsbetrieb erfassbare Reaktionen des Fahrers berücksichtigt, durch die die Notwendigkeit eines Hilfsbetriebs, z. B. in Notsituationen, mit hoher Wahrscheinlichkeit voraussehbar ist. Derartige Reaktionen sind beispielsweise die Geschwindigkeit des Loslassens des Gaspedals sowie die Pedalwechselzeit zwischen dem vollständigen Loslassen des Gaspedals und dem Beginn der Betätigung des Bremspedals. Eine Verkürzung des Anhalteweges wird beispielsweise dadurch erreicht, dass die erste Schwelle für den Vorsteuerdruck und die zweite Schwelle für den Anstieg des Vorsteuerdrucks je niedriger vorgegeben werden, desto höher die Geschwindigkeit des Loslassens des Gaspedals und / oder desto kürzer die Pedalwechselzeit ist.

Nach einer Weiterbildung der Erfindung werden die Hilfs-Bremskreiskomponenten in eine Vorbereitungsstellung gebracht, bevor die Bedingungen zum Umschalten auf den Hilfsbetrieb erfüllt sind, wenn die Geschwindigkeit des Loslassens des Gaspedals eine dritte Schwelle überschritten hat und die Pedalwechselzeit eine vierte Schwelle unterschritten hat. Die Hilfs-Bremskreis-Komponenten sollen dabei bereits in eine Vorbereitungsstellung gebracht werden, bevor der Vorsteuerdruck vorgegeben wird.

Bei einer hydraulischen Bremsregelungsanlage entspricht die Vorbereitungsstellung insbesondere einer Bereitschaftsstellung der Hydraulikaggregate als Hilfs-Bremskreis-Komponenten. Beispielsweise ist die Vorbereitungsstellung einer Pumpe als Hilfs-Bremskreis-Komponente deren Anlauf auf volle Drehzahl, so dass deren Trägheitsphase im Falle des Umschaltens auf den Hilfsbetrieb bereits überwunden ist. In einer Steigerung der Vorbereitungsstellung können beispielsweise auch Ventile als Hilfs-Bremskreis-Komponenten zusätzlich derart geschaltet werden, dass bereits Druckmittelvolumen in die Radbremszylinder gefördert wird, um die Lüftspiele in den Radbremszylindern noch vor Umschalten auf den Hilfsbetrieb zu überwinden. Durch die Vorbereitungsstellung werden hydraulisch bzw. mechanisch bedingte Totzeiten hinsichtlich der Reaktionszeit im Hilfsbetrieb verhindert und somit der Anhalteweg ab Beginn des Lösens des Gaspedals bis zur gewünschten Fahrzeugverzögerung minimiert.

In der Zeichnung ist ein Ausführungsbeispiel der Erfindung dargestellt. Es zeigt
- Fig. 1: schematisch einen möglichen Aufbau der erfindungsgemäßen Bremsregelungsanlage, wobei nur ein Bremskreis aufgezeigt ist, und
- Fig. 2: den Verlauf des Vorsteuerdruckes sowie den Verlauf des Drukkes in den Radbremszylindern gemäß einer Regelung mit der erfindungsgemäßen Bremsregelungsanlage im Hilfsbetrieb.

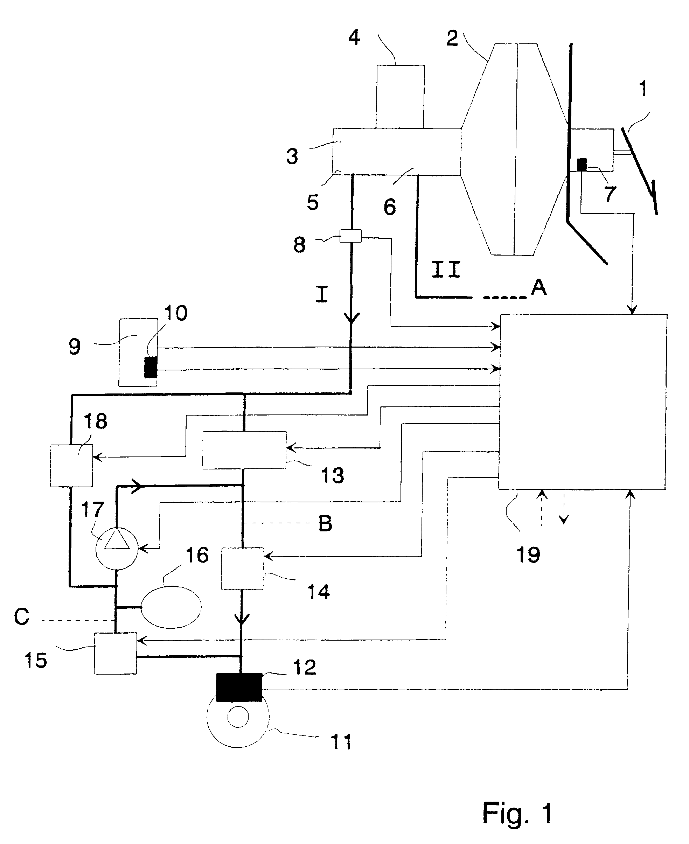

In Fig. 1 ist ein Bremspedal 1 mit einem Bremskraftverstärker 2 verbunden. Am Bremskraftverstärker 2 schließt ein Hauptbremszylinder 3, vorzugsweise ein Tandem-Hauptbremszylinder, an. Der Hauptbremszylinder 3 ist mit einem Bremsflüssigkeitsausgleichsbehälter 4 verbunden. Der Hauptbremszylinder 3 weist zwei Druckausgänge 5 und 6 auf. Der Druckausgang 6 ist beispielsweise einem mit A angedeuteten, jedoch nicht konkret dargestellten Vorderachs-Bremskreis II zugeordnet. Der Druckausgang 5 des Hauptbremszylinders 3 ist mit einem Hinterachsbremskreis I verbunden. Von dem Hinterachsbremskreis I der vorzugsweise hydraulischen Bremsregelungsanlage ist zur Vereinfachung nur ein Rad 11 mit den für die Erfindung wesentlichen Hilfs-Bremskreis-Komponenten 13 bis 18 als Beispiel dargestellt. Die hydraulischen Verbindungen zum zweiten Rad des Hinterachsbremskreises I sind mit B und C angedeutet.

Vom Druckausgang 5 führt eine hydraulische Druckmittel-Leitung zum Umschaltventil 13 der Hilfs-Bremskreis-Komponenten des Hinterachsbremskreises I. Vom Umschaltventil 13 führt eine Druckmittelleitung über ein Einlaßventil 14 zum Radbremszylinder 12 des Rades 11. Zwischen dem Radbremszylinder 12 und dem Einlaßventil 14 führt eine weitere Druckmittel-Leitung zu einem Auslaßventil 15, das ausgangsseitig mit einer Rückförderpumpe 17 verbunden ist. Zwischen dem Auslaßventil 15 und der Rückförderpumpe 17 zweigt eine Niederdruckspeicherkammer 16 ab. Die am Ausgang der Rückförderpumpe 17 angeschlossene Druckmittel-Leitung ist mit der zwischen dem Umschaltventil 13 und dem Einlaßventil 14 angeordneten Druckmittel-Leitung verbunden. Zudem zweigt eine Druckmittel-Leitung von der den Druckausgang 5 und das Umschaltventil 13 verbindenden Druckmittel-Leitung zu einem Ladeventil 18 zum Ansaugen von Druckmittel ab. Ausgangsseitig ist dieses Ladeventil 18 mit der Druckmittel-Leitung zwischen dem Auslaßventil 15 und der Rückförderpumpe 17 verbunden.

Die Bremsregungsanlage weist weiterhin ein elektronisches Steuergerät 19 auf, dessen Ausgänge über elektrische Steuerleitungen mit den Hilfs-Bremskrerskomponenten, nämlich dem Umschaltventil 13, dem Einlaßventil 14, dem Auslaßventil 15, der Rückförderpumpe 17 und dem Ladeventil 18 verbunden sind. In Fig. 1 sind schematisch die funktionell wichtigsten Komponenten der erfindungsgemäßen Bremsregelungsanlage dargestellt. Ergänzend wird für eine mögliche detailliertere Anordnung der hydraulischen Komponenten der erfindungsgemäßen Bremsregelungsanlage auf Fig. 1 der DE 44 27 246 C2 verwiesen. Die Hilfs-Bremskreiskomponenten 13 bis 18 sind vorzugsweise die Komponenten einer üblichen Fahrzeug-Bremsregelungsanlage.

Das Steuergerät 19. erhält als Eingangssignale erstens das Signal der Bremspedalsensoreinrichtung 7, beispielsweise in Form eines Bremslichtschalters, zur Erfassung des Beginns der Betätigung des Bremspedals 1, zweitens das Signal des Drucksensors 8 zur Erfassung des Vorsteuerdrukkes (p_{F}), drittens das Signal der Gaspedalsensoreinrichtung 9, z. B. eines Gaspedal-Potentiometers, zur Erfassung der Geschwindigkeit (ds/dt) des Loslassens des Gaspedals sowie viertens das Signal des Endlagenschalters 10, z. B. eines Leerlaufschalters, zur Erfassung einer auf das Loslassen des Gaspedals bezogenen Endstellung. Darüber hinaus erfaßt das Steuergerät 19 mittels hier nicht dargestellter Radsensoren (Drehzahlsensoren und/oder Drucksensoren) über weitere Eingangsleitungen den tatsächlichen Druckwert (p_{S}) im Radbremszylinder 12.

Im Normalbetrieb, d. h. ohne Bremskraftunterstützung durch die Hilfs-Bremskreis-Komponenten 13 bis 18, sind das Umschaltventil 13 und das Einlaßventil 14 geöffnet, das Auslaßventil 15 und das Ladesventil 18 geschlossen, und die Rückförderpumpe 17 ausgeschaltet. Dadurch besteht eine direkte Verbindung über Druckmittel-Leitungen zwischen dem Druckausgang 5 und dem Radbremszylinder 12, so daß der tatsächliche Druckwert (p_{S}) im Radbremszylinder 12 dem Vorsteuerdruck (p_{F}) entspricht.

Im Hilfsbetrieb findet mittels der Hilfs-Bremskreis-Komponenten 13 bis 18 hinsichtlich des Vorsteuerdruckes eine Bremsdrucküberlagerung statt, so daß der tatsächliche Druckwert (p_{S}) größer als der Vorsteuerdruck (p_{F}) eingestellt werden kann.

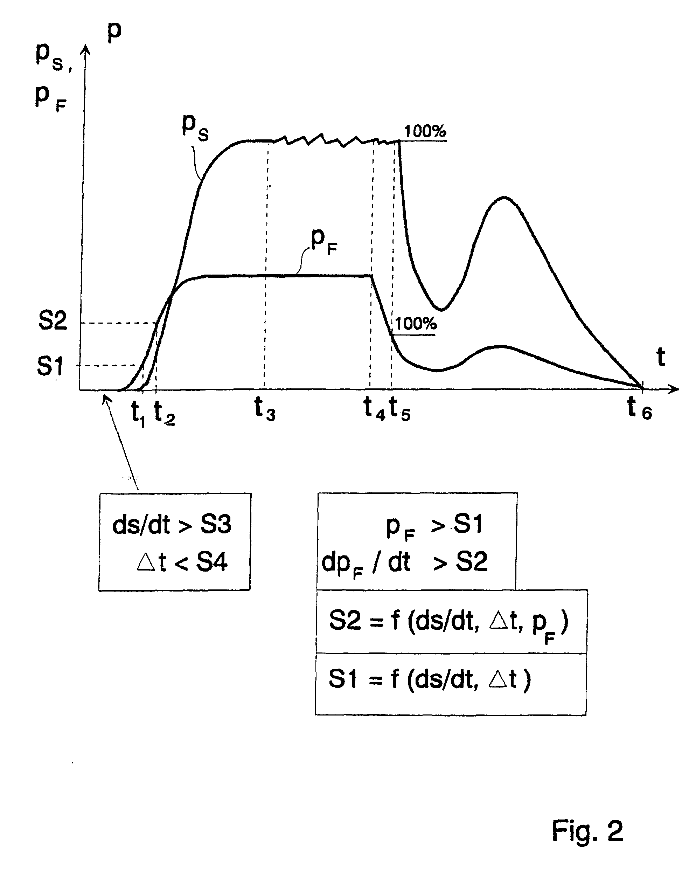

Eine mögliche Regelung der erfindungsgemäßen Bremsregelungsanlage ist in Fig. 2 dargestellt. Das Steuergerät 19 erfaßt über den Drucksensor 8 den Vorsteuerdruck p_{F} und vergleicht ihn mit einer ersten Schwelle S1. Weiterhin bildet das Steuergerät 19 den Vorsteuerdruck-Gradienten dp_{F}/dt aus dem Signal des Drucksensors 8 und vergleicht diesen mit einer zweiten Schwelle S2. Grundsätzlich wird auf Hilfsbetrieb umgeschaltet, wenn die Schwelle S1 und die Schwelle S2 überschritten sind.

Ergänzend wird darauf hingewiesen, daß die Schwellen S1 und S2 auch eine Funktion der Geschwindigkeit ds/dt des Loslassens des Gaspedals, der Pedalwechselzeit Δ t und des Vorsteuerdrucks p_{F}, aber auch der Druckmittel-Temperatur oder des Fahrertyps sein kann, der z.B. aufgrund einer langzeitigen Beobachtung des Fahrverhaltens in Form eines Faktors ermittelt werden kann.

Weiterhin wird mittels der Gaspedalsensoreinrichtung 9 die Geschwindigkeit ds/dt des Loslassens des Gaspedals erfaßt und mit einer dritten Schwelle S3 verglichen. Die dritte Schwelle S3 muß nicht zwingend ein fester Wert sein, sondern kann beispielsweise in Abhängigkeit von verschiedenen Fahrzeugparametern durch eine Faktorkurve vorgegeben werden. Ist bereits vor dem Überschreiten der Schwellen S1 und S2 die dritte Schwelle S3 überschritten, bringt das Steuergerät 19 zumindest eine der Hilfs-Bremskreis-Komponenten 13 bis 18 in eine Vorbereitungsstellung.

Eine Vorbereitungsstellung kann beispielsweise durch folgende vier Alternativen realisiert werden:

In einer ersten Alternative werden das Ladeventil 18 geschlossen und die Rückförderpumpe 47 eingeschaltet, um die Totzeit der Pumpe 17 zu überbrücken, die zum Anlaufen benötigt wird.

In einer zweiten Alternative werden das Ladeventil 18 geöffnet und das Umschaltventil 13 sowie das Einlaßventil 14 geschlossen. Auch wird die Rückförderpumpe 17 eingeschaltet. Hierdurch wird der Hilfsbetrieb leichter ausgelöst, da insbesondere wegen des geschlossenen Umschaltventils 13 der Vorsteuerdruck p_{F} und der Vorsteuerdruck-Gradient dp_{F}/dt schneller ansteigen.

In einer dritten Alternative werden das Ladeventil 18 sowie das Einlaßventil 14 geöffnet und das Umschaltventil 13 geschlossen. Die Rückförderpumpe 17 wird eingeschaltet. Hierdurch wird von der Rückförderpumpe 17 bereits Druckmittel-Volumen gefördert und somit bereits ein leichter Anstieg des tatsächlichen Druckes p_{S} im Radbremszylinder 12 erzeugt. Hierdurch wird das Lüftspiel im Radbremszylinder 12 überwunden.

In einer vierten Alternative kann die Vorbereitungsstellung im weiteren Sinne aber auch in einem Reduzieren der Schwellen S1 und S2 bestehen, um ein leichteres Auslösen des Hilfsbetriebs zu ermöglichen.

Durch die Vorbereitungsstellung der Hilfs-Bremskreis-Komponenten wird der Druck pₛ im Radbremszylinder 12 schnellstmöglich aufgebaut, sobald auf den Hilfsbetrieb umgeschaltet wird oder auch sobald die Bremse "normal" betätigt wird, d.h. derart, daß die Schwellen S1 und S2 nicht überschritten werden. Dadurch wird die Zeit bis zum Erreichen der gewünschten Verzögerung und somit der Anhalteweg verkürzt.

Zusätzlich kann das Steuergerät 19 mittels der Signale des Endlagenschalters 10 und des Bremslichtschalters 7 die Pedalwechselzeit Δ t zwischen dem vollständigen Loslassen des Gaspedals und dem Beginn der Betätigung des Bremspedals 1 erfassen. Sind wie in den vorbeschriebenen Beispielen die Hilfs-Bremskreis-Komponenten 13 bis 18 in eine Vorbereitungsstellung gebracht, da die Geschwindigkeit ds/dt des Loslassens des Gaspedals die Schwelle S3 überschritten hat, wird diese Vorbereitungsstellung wieder ausgeschaltet, wenn der Beginn der Betätigung des Bremspedals nicht innerhalb einer vorgegebenen Zeitspanne auf die Erfassung der auf das Loslassen des Gaspedals bezogenen Endstellung hin erkannt wird, d. h. wenn die Pedalwechselzeit Δ t unendlich oder zumindest größer als die vorgegebene Zeitspanne ist. In diesem Fall werden beispielsweise die bereits angelaufene Rückförderpumpe 17 wieder ausgeschaltet, die Ventile 13, 14, 15, und/oder 18 in ihre Grundstellung gebracht und/oder die Schwellen S1 und S2 wieder auf den Ausgangswert erhöht.

Sind die Bedingungen zum Umschalten auf den Hilfsbetrieb nicht erfüllt, findet ein Bremsvorgang im Normalbetrieb statt, bei dem jedoch ebenfalls der Anhalteweg durch das Vorbefüllen des Radbremszylinders 12 verkürzt ist. Somit wird erfindungsgemäß nicht nur der Anhalteweg bei einem Hilfsbetrieb sondern auch bei Normalbetrieb minimiert. Wird das Bremspedal nicht betätigt entspannt sich das über die Rückförderpumpe 17 eingebrachte Druckmittel-Volumen über den Hauptbremszylinder 3 in den Ausgleichsbehälter 4, da alle Komponenten in die Ausgangslage zurückgestellt werden.

Unterschreitet jedoch die Pedatwechselzeit Δ t eine vierte Schwelle S4, wird die Vorbereitungsstellung eingestellt bzw. beibehalten, falls zuvor die Schwelle S3 überschritten wurde. Liegen anschließend die Bedingungen zum Umschalten auf den Hilfsbetrieb vor, wird ein schneller Druckaufbau in den Radbremszylindern und damit ein kleinstmöglicher Anhalteweg erreicht.

In Fig. 2 sind der Verlauf des Druckes p_{S} im Radbremszylinder 12 und der Verlauf des Vorsteuerdruckes p_{F} über der Zeit dargestellt. Bei dem Ausführungsbeispiel nach Fig. 2 wird davon ausgegangen, daß bereits vor dem Anstieg des Vorsteuerdruckes p_{F} die Geschwindigkeit ds/dt des Loslassens des Gaspedals die Schwelle S3 überschritten und die Pedalwechselzeit Δ t die Schwelle S4 unterschritten hat, auch wenn dieser Zustand nicht zwingende Voraussetzung ist. Somit sind vom Steuergerät 19 die Hilfs-Bremskreis-Komponenten 13 bis 18 bereits in eine Vorbereitungsstellung gebracht worden, bevor der Vorsteuerdruck p_{F} beginnt anzusteigen. Zum Zeitpunkt t₁ hat der Vorsteuerdruck p_{F} die Schwelle S1 überschritten. Zum Zeitpunkt t₂ hat auch der Vorsteuerdruck-Gradient die Schwelle S2 überschritten, so daß zum Zeitpunkt t₂ die Bedingungen zum Umschalten auf den Hilfsbetrieb vorliegen. Somit wird der Hilfsbetrieb eingeschaltet, so daß ab dem Zeitpunkt t₂ der Druck p_{S} im Radbremszylinder 12, im folgenden Systemdruck genannt, stark ansteigt. Im Hilfsbetrieb kann beispielsweise in einer Notsituation, der Systemdruck p_{S} derart angehoben werden, daß, hier zum Zeitpunkt t₃ dargestellt, eine ABS-Regelung stattfindet und somit der größtmögliche Systemdruck p_{S} erreicht ist.

Vorzugsweise wird der Hilfsbetrieb ab dem Zeitpunkt t₃ mit maximalem Systemdruck p_{S} in der ABS-Regelphase solange beibehalten, bis erstens zum Zeitpunkt t₄ der Vorsteuerdruck p_{F} beginnt abzunehmen und zweitens zum Zeitpunkt t₅ die Abnahme des Vorsteuerdruckes p_{F} einen vorgegebenen Wert überschritten hat. Zu diesem Zeitpunkt t₅ geht der Hilfsbetrieb in eine Dosierphase über. Hierbei wird der Vorsteuerdruck p_{F} zum Zeitpunkt t₅ als 100 % sowie der Systemdruck p_{S} zum Zeitpunkt t₅ ebenfalls als 100 % definiert. Der Systemdruck p_{S} entspricht dabei der aktuellen Verzögerung, da sich die Verzögerung direkt proportional zum Systemdruck p_{S} verhält. Anschließend verläuft der Systemdruck p_{S} bzw. der tatsächliche Druckwert p_{S} im Radbremszylinder 12 proportional zum Verlauf des Vorsteuerdruckes p_{F}, bis zum Zeitpunkt t₆ der Hilfsbetrieb abgebrochen wird. Zum Zeitpunkt t₆ sind der Vorsteuerdruck p_{F} und der Systemdruck p_{S} zumindest nahezu gleich bzw. gleich Null. Alternativ kann der Hilfsbetrieb jedoch auch ausgeschaltet werden, wenn die Fahrzeuggeschwindigkeit kleiner als ein vorgegebener Wert ist oder über den Bremslichtschalter 7 das Ende der Betätigung des Bremspedals angezeigt wird.

Rein vorsorglich wird darauf hingewiesen, daß die Dosierphase auch unabhängig von den anderen Merkmalen der erfindungsgemäßen Bremsanlage für sich gesehen möglich und vorteilhaft ist.

## Patentansprüche

1. Bremsregelungsanlage für Kraftfahrzeuge mit einem elektronischen Steuergerät (19), mit einem Bremspedal (1), über dessen Betätigung ein Vorsteuerdruck (p_{F}) vom Fahrer vorgebbar ist, und mit vom Bremspedal (1) entkoppelten steuerbaren Hilfs-Bremskreis-Komponenten (13, 14, 15, 17, 18) zur Einstellung von Druckwerten (p_{S}) in den Radbremszylindern (12) eines Kraftfahrzeug-Rades (11), wobei in einem Normalbetrieb der tatsächliche Druckwert (p_{S}) dem Vorsteuerdruck (p_{F}) entspricht und in einem Hilfsbetrieb der tatsächliche Druckwert (p_{S}) größer als der Vorsteuerdruck (p_{F}) eingestellt werden kann, wobei ein Drucksensor (8) zur Erfassung des Vorsteuerdruckes (p_{F}) und des Vorsteuerdruck-Gradienten (dp_{F}/dt) vorgesehen ist und das Steuergerät (19) auf den Hilfsbetrieb umschaltet, wenn der Vorsteuerdruck (p_{F}) eine erste Schwelle (S1) und der Vorsteuerdruck-Gradient (dp_{F}/dt) eine zweite Schwelle (S2) überschritten haben, **dadurch gekennzeichnet, daß** eine Gaspedalsensoreinrichtung (9) zur Erfassung der Geschwindigkeit (ds/dt) des Loslassens des Gaspedals vorgesehen ist und daß vom Steuergerät (19) zumindest eine der Hilfs-Bremskreis-Komponenten (13, 14, 15, 17,18) in eine Vorbereitungsstellung gebracht wird, wenn die Geschwindigkeit (ds/dt) des Loslassens des Gaspedals eine dritte Schwelle (S3) überschritten hat, auch wenn die Bedingungen zum Umschalten auf den Hilfsbetrieb noch nicht vorliegen.

2. Bremsregelungsanlage nach Patentanspruch 1, **dadurch gekennzeichnet, daß** ein Endlagenschalter (10) zur Erfassung einer auf das Loslassen des Gaspedals bezogenen Endstellung und eine Bremspedalsensoreinrichtung (7) zur Erfassung des Beginns der Betätigung des Bremspedals vorgesehen sind, und daß die Vorbereitungsstellung wieder ausgeschaltet wird, wenn der Beginn der Betätigung des Bremspedals nicht innerhalb einer vorgegebenen Zeitspanne auf die Erfassung der auf das Loslassen des Gaspedals bezogenen Endstellung hin erkannt wird.

3. Bremsregelungsanlage nach Patentanspruch 1, **dadurch gekennzeichnet, daß** ein Endlagenschalter (10) zur Erfassung einer auf das Loslassen des Gaspedals bezogenen Endstellung und eine Bremspedalsensoreinrichtung (7) zur Erfassung des Beginns der Betätigung des Bremspedals (1) vorgesehen sind, daß mittels der Signale des Endlagenschalters (10) und der Bremspedalsensoreinrichtung (7) die Pedalwechselzeit (Δt) zwischen dem vollständigen Loslassen des Gaspedals und dem Beginn der Betätigung des Bremspedals (1) erfaßt wird und daß vom Steuergerät (19) zumindest eine der Hilfs-Bremskreis-Komponenten (13, 14, 15, 17, 18) in einer Vorbereitungsstellung gehalten wird oder in eine Vorbereitungsstellung gebracht wird, wenn die Pedalwechselzeit (Δt) eine vierte Schwelle (S3) unterschritten hat, auch wenn die Bedingungen zum Umschalten auf den Hilfsbetrieb noch nicht vorliegen.

4. Bremsregelungsanlage nach einem der Patentansprüche 1 bis 3, **dadurch gekennzeichnet, daß** der Hilfsbetrieb in eine Dosierphase übergeht, wenn der Vorsteuerdruck (p_{F}) abnimmt und daß in der Dosierphase der tatsächliche Druckwert (p_{S}) in den Radbremszylindern (12) jeweils proportional zum Verlauf des Vorsteuerdruckes (p_{F}) eingestellt wird.

## Claims

1. A brake control system for motor vehicles comprising an electronic control unit (19), a brake pedal (1) which can be actuated by the driver in order to preset a pilot pressure (p_{F}), and controllable auxiliary brake circuit components (13, 14, 15, 17, 18) uncoupled from the brake pedal (1) for adjusting pressures (p_{S}) in the brake cylinders (12) of a motor-vehicle wheel (11), wherein during normal operation the actual pressure (p_{S}) is equal to the pilot pressure (p_{F}) whereas during auxiliary operation the actual pressure (p_{S}) can be set higher than the pilot pressure (p_{F}), wherein a pressure sensor (8) is provided for detecting the pilot pressure (p_{F}) and the pilot-pressure gradient (dp_{F}/dt) and the control unit (19) switches over to auxiliary operation if the pilot pressure (p_{F}) has exceeded a first threshold (S1) and the pilot-pressure gradient (dp_{F}/dt) has exceeded a second threshold (S2), **characterised in that** an accelerator pedal sensor device (9) is provided for detecting the speed (ds/dt) with which the auxiliary pedal is released and the control unit (19) brings at least one of the auxiliary brake circuit components (13, 14, 15, 17, 18) into a preparatory position if the speed (ds/dt) of release of the accelerator pedal has exceeded a third threshold (S3), even if the conditions for changing over to auxiliary operation do not yet apply.

2. A brake control system according to claim 1, **characterised in that** an end of travel switch (10) for detecting an end position relative to release of the accelerator pedal is provided together with a brake pedal sensor device (7) for detecting the beginning of actuation of the brake pedal, and the preparatory position is switched off if the beginning of actuation of the brake pedal is not recognised within a preset time after recognition of the end position relative to release of the accelerator pedal.

3. A brake control system according to claim 1, **characterised in that** an end of travel switch (10) for detecting an end position relative to release of the accelerator pedal is provided together with a brake pedal sensor device (7) for detecting the beginning of actuation of the brake pedal (1); the time (Δt) required for changing pedals between complete release of the accelerator pedal and beginning of actuation of the brake pedal (1) is determined via the signals from the end of travel switch (10) and from the brake pedal sensor device (7); and the control unit (19) holds at least one of the auxiliary brake circuit components (13, 14, 15, 17, 18) in a preparatory position or brings them into a preparatory position if the pedal change time (Δt) has fallen below a fourth threshold (S4), even if the conditions for changing over to auxiliary operation do not yet apply.

4. A brake control system according to any of claims 1 to 3, **characterised in that** the auxiliary operation changes to a metering phase if the pilot pressure (p_{F}) decreases, and during the metering phase the actual pressure (p_{S}) in the wheel brake cylinders (12) is set in proportion to the variation in the pilot pressure (p_{F}).

## Revendications

1. Système de contrôle de freinage pour véhicules automobiles comprenant un appareil électronique de commande (19), une pédale de frein (1) permettant au conducteur, en l'actionnant, de délivrer une pression pilote (p_{F}), des composants (13, 14, 15, 17, 18) d'un circuit de freinage de renfort, commandables mais découplés de la pédale de frein, pour régler des valeurs de pression (ps) dans les cylindres de frein de roue (12) associés à une roue (11) du véhicule, étant précisé qu'en fonctionnement normal la valeur effective (p_{S}) de la pression correspond à la pression pilote (p_{F}) tandis qu'en fonctionnement de secours, cette valeur (p_{S}) peut être réglée supérieure à la valeur (p_{F}), un détecteur de pression (8) est prévu pour saisir la pression pilote (p_{F}) et le gradient de cette pression (dp_{F}/dt) et l'appareil de commande (19) fait passer en fonctionnement de renfort quand la pression pilote (p_{F}) et le gradient de pression pilote (dp_{F}/dt) ont dépassé respectivement un premier seuil (S1) et un second seuil (S2),
**caractérisé en ce qu'**
il est prévu un dispositif de détection de la pédale d'accélérateur (9) pour saisir la vitesse (ds/dt) de relâchement de cette pédale et au moins un des composants du circuit de freinage de renfort (13, 14, 15, 17, 18) est amené par l'appareil de commande (19) à une position de préparation quand la vitesse (ds/dt) de relâchement de la pédale de frein a dépassé un troisième seuil (S3) même si les conditions pour passer au fonctionnement de renfort ne sont pas remplies.

2. Système de contrôle de freinage selon la revendication 1,
**caractérisé en ce qu'**
il est prévu un contacteur de fin de course (10) pour saisir la fin de la course de relâchement de la pédale d'accélérateur et un dispositif (7) de détection de la pédale de frein pour saisir le début de l'actionnement de celle-ci, la position de préparation étant à nouveau écartée si le début de l'actionnement de la pédale de frein n'est pas reconnu dans un délai prédéfini après la saisie de la position de fin de course de relâchement de la pédale d'accélérateur.

3. Système de contrôle de freinage selon la revendication 1,
**caractérisé en ce qu'**
- il est prévu un contacteur de fin de course (10) pour saisir la position finale de la pédale d'accélérateur après son relâchement ainsi qu'un dispositif de détection de la pédale de frein (7) pour saisir le début de l'actionnement de cette pédale (1),
- par l'intermédiaire des signaux émis par le contacteur de fin de course (10) et par le dispositif de détection de la pédale de frein (7) le temps de changement de pédale (Δt) séparant le relâchement total de la pédale d'accélérateur et le début de l'actionnement de la pédale de frein (1) est saisi, et
- par l'intermédiaire de l'appareil de commande (19), au moins un des composants de circuit de freinage de renfort (13, 14, 15, 17, 18) est maintenu ou amené en position préparatoire, si le temps de changement de pédale (Δt) dépasse un quatrième seuil (S4), même si les conditions de passage au fonctionnement de renfort ne sont pas encore réunies.

4. Support de contrôle de freinage selon l'une quelconque des revendications 1 à 3,
**caractérisé en ce que**
le fonctionnement de renfort se poursuit par une phase de dosage quand la pression pilote (p_{F}) diminue, et dans cette phase de dosage la valeur réelle (p_{S}) de la pression dans les cylindres de frein de roue (12) est réglée en restant proportionnelle à l'évolution de la pression pilote (p_{F}).
